# EUROPÄISCHE PATENTSCHRIFT

(11) **EP 2 984 355 B1**
(45) Veröffentlichungstag und Bekanntmachung des Hinweises auf die Patenterteilung: **17.10.2018**
(21) Anmeldenummer: 14716330.7
(22) Anmeldetag: 10.04.2014
(51) Int. Cl.: F16B 13/08, E04G 17/06, E04G 23/02, F16B 5/02

(54) **DICHTUNGSSTOPFEN**
SEALING PLUG
BOUCHON OBTURATEUR

(30) Priorität: 12.04.2013 DE 102013206576
(43) Veröffentlichungstag der Anmeldung: 17.02.2016
(60) Teilanmeldung: 16169272.8
(73) Patentinhaber: Peri GmbH, 89264 Weissenhorn (DE)
(72) Erfinder: SCHNEIDER, Werner, Erbach 89155 (DE); BELMANN, Eugen, 89264 Weißenhorn (DE); LORENZ, Heiner, 89231 Neu-Ulm (DE); BRUNNER, Werner, 89290 Buch (DE)
(74) Vertreter: Kohler Schmid Möbus Patentanwälte
(86) Internationale Anmeldenummer: PCT/EP2014/057222
(87) Internationale Veröffentlichungsnummer: WO 2014/167037

(56) Entgegenhaltungen:
- WO-A1-93/23640
- WO-A1-99/11940
- WO-A1-2008/094647
- DE-U1- 8 003 328
- DE-U1- 8 520 968
- GB-A- 2 210 124
- US-A- 4 760 868
- US-A- 4 946 325

## Beschreibung

Die Erfindung betrifft einen Dichtungsstopfen zum Verschließen von Ankerlöchern, insbesondere von konischen Ankerlöchern in Betonwänden, gemäß Anspruch 1.
Die Erfindung betrifft weiterhin eine Betonwand mit einem solchen

Dichtungsstopfen, gemäß Anspruch 9.

Bei der Herstellung einer Betonwand mithilfe einer Schalungstechnik wird in der Regel auf beiden Seiten der herzustellenden Wand eine Schalung gestellt. Man spricht dabei von einer doppelhäuptigen Schalung. Der beim Gießen des Betons in die doppelhäuptige Schalung auftretende Betondruck, der auf den beiden Schalungen lastet, wird hierbei über Schalungsanker aufgenommen. Die Schalungsanker werden in der Regel in Hüllrohre eingebaut, um eine Wiederverwendung der Schalungsanker zu ermöglichen. Die Hüllrohre sind in der Regel zylindrisch und verbleiben im Beton. Bei einseitiger Ankerung wird üblicherweise kein Hüllrohr verwendet. Nach dem Trocknen, der Aushärtung des Betons wird der Schalungsanker entnommen, so dass in der Betonwand ein Ankerloch verbleibt. Das Ankerloch kann bei einseitiger Ankerung konisch ausgebildet sein.
Die beschriebenen Ankerlöcher werden mit Dichtungsstopfen verschlossen.
Aus der DE 20 2009 018 645 U1 ist ein Dichtungsstopfen zum Verschließen von Ankerlöchern bekannt geworden, der aus einem Elastomer besteht. Der bekannte Dichtungsstopfen wird in Richtung seiner Längsachse in das Ankerloch geschoben. Hierdurch kann jedoch kein dauerhafter wasserdichter Verschluss des Ankerlochs bei hohen anliegenden Wasserdrücken erreicht werden.
Weiterhin ist aus der DD 278 370 A1 ein wasserdichter Schalungsankerdurchlass bekannt geworden, bei dem die Abdichtung mittels einer Spreizscheibe und Mörtel erfolgt. Dabei wird nach dem Einführen der Spreizscheibe in das Ankerloch die Spreizscheibe mit einem Stempel geweitet, so dass die Spreizscheibe in den Beton der Betonwand eingetrieben wird. Dies erfordert jedoch eine Entfernung des Hüllrohres. Weiterhin wird durch das Aufspreizen der Spreizscheibe die Betonwand beschädigt.
Die DE 80 03 328 U1 und die US 4 760 868 A offenbaren Dichtungsstopfen mit einer Schraube, wobei das axiale Anziehen der Schraube zu einer radialen Erweiterung des Dichtungsstopfens führt.

WO 2008/094647 A1 offenbart einen Dichtungsstopfen gemäß dem Oberbegriff des Anspruchs 1. WO 2008/094647 A1 offenbart auch die folgenden Merkmale der Variante b des Anspruchs 1, wobei das Stangenelement als Gewindeelement ausgebildet ist, das zumindest einen ersten Gewindestangenabschnitt mit einem ersten Gewinde aufweist, das in ein zweites Gewinde des Konterelements eingreift und der Dichtungsstopfen ein relativ zum Gewindeelement und/oder Konterelement um die Längsachse des Gewindeelements und/oder Konterelements rotierbares erstes Drehelement aufweist, das mittelbar oder unmittelbar an dem Gewindeelement und/oder Konterelement und dem ersten flexiblen Element anliegt.

Ferner ist in der Bautechnik bereits seit sehr langer Zeit ein Dichtungsstopfen zum Verschließen von Ankerlöchern bekannt, der aus einem flexiblen Dichtungsring besteht, der von einer Schraube durchdrungen wird, wobei die Schraube durch eine Mutter gekontert ist.

Durch Drehen der Schraube wird der Dichtungsring in Längsrichtung der Schraube zwischen einem Schraubenkopf der Schraube und der Mutter gepresst. Hierdurch wird der Dichtungsring radial zur Längsrichtung der Schraube aufgeweitet. Nachteilig ist dabei jedoch, dass der Dichtungsring beim Drehen der Schraube relativ zu der Mutter tordiert wird. Mit der Zeit tordiert der Dichtungsring im Ankerloch zurück (Retorsion) und verliert somit an Spannung und Dichtigkeit.

Der Erfindung liegt demgegenüber die Aufgabe zugrunde, einen Dichtungsstopfen zum Verschließen von Ankerlöchern bereit zu stellen, der einen dauerhaften wasserdichten Verschluss eines Ankerloches gewährleistet.

Diese Aufgabe wird erfindungsgemäß durch einen Dichtungsstopfen gemäß Anspruch 1 gelöst. Die Unteransprüche geben bevorzugte Weiterbildungen an.

Durch die Pressung wird das flexible Element nach außen hin aufgeweitet und bewirkt einen Verschluss des Ankerlochs. Das erste flexible Element kann dadurch torsionsfrei aufgeweitet werden und das Ankerloch fluiddicht verschließen. Ein Zurücktordieren des ersten flexiblen Elements erfolgt nicht. Hierdurch kann der erste Dichtungsstopfen das Ankerloch dauerhaft wasserdicht verschließen. Weiterhin wird durch den festen Verschluss eine feuerhemmende Wirkung erzielt.

Das zusammengepresste flexible Element ist vorzugsweise durch zumindest eine Rastverbindung des ersten Dichtungsstopfens im gepressten Zustand fixierbar. Der erste Dichtungsstopfen weist vorzugsweise mehrere Rastverbindungen auf, um das flexible Element in mehreren Schritten zusammenzupressen. Hierdurch kann eine Fixierung in der Art eines Ratschenmechanismus, wie er beispielsweise bei Kabelbindern zum Einsatz kommt, erfolgen.
Alternativ oder zusätzlich dazu kann das gepresste flexible Element durch einen Splint des ersten Dichtungsstopfens fixierbar sein.
Vorzugsweise ist eine Klemmscheibe zur Fixierung des flexiblen Elements im gepressten Zustand vorgesehen, wobei die Klemmscheibe eine Durchgangsausnehmung aufweist, mittels der die Klemmscheibe auf einen Stangenabschnitt des Stangenelements aufschiebbar und relativ zu dem Stangenelement verklemmbar ist.
Das erste flexible Element kann in Form eines Schlauchs ausgebildet sein, der zumindest teilweise von dem Stangenelement durchdrungen wird. Hierdurch ist eine Abdichtung des Ankerlochs auf einer Länge von mehr als 40mm erreichbar. Insbesondere ist eine Abdichtung des Ankerlochs auf einer Länge von 50mm erreichbar. Der Schlauch wird dabei vorzugsweise vollständig zwischen einem Teil des Stangenelements und einem Teil des Konterelements gehalten.

Der erste Dichtungsstopfen ist dadurch gekennzeichnet, dass das Stangenelement als Gewindeelement ausgebildet ist, das zumindest einen ersten Gewindestangenabschnitt mit einem ersten Gewinde aufweist, das in ein zweites Gewinde des Konterelements eingreift und der erste Dichtungsstopfen ein relativ zum Gewindeelement und/oder Konterelement um die Längsachse des Gewindeelements und/oder Konterelements rotierbares erstes Drehelement aufweist, das mittelbar oder unmittelbar an dem Gewindeelement und/oder Konterelement und dem ersten flexiblen Element anliegt.

Die erfindungsgemäße Aufgabe wird in diesem Spezialfall durch einen ersten Dichtungsstopfen zum Verschließen von Ankerlöchern, insbesondere von konischen Ankerlöchern, in Betonwänden gelöst, wobei der erste Dichtungsstopfen ein Stangenelement aufweist, das zumindest einen ersten Gewindestangenabschnitt mit einem ersten Gewinde aufweist, das in ein zweites Gewinde eines Konterelements eingreift, wobei der erste Dichtungsstopfen ein erstes flexibles Element aufweist, das in Längsrichtung oder parallel zur Längsrichtung des Stangenelements durch eine Drehung des Stangenelements relativ zum Konterelement um die Längsachse des Stangenelements und/oder Konterelements pressbar ist, wobei der erste Dichtungsstopfen ein relativ zum Stangenelement und/oder Konterelement um die Längsachse des Stangenelements und/oder Konterelements rotierbares erstes Drehelement aufweist, das mittelbar oder unmittelbar an dem Stangenelement und/oder Konterelement und dem ersten flexiblen Element anliegt.

Stangenelement und Konterelement sind also relativ zueinander verdrehbar. Das Stangenelement kann somit ortsfest und das Konterelement relativ zum Stangenelement verdrehbar sein. Weiterhin kann das Konterelement ortsfest und das Stangenelement relativ zum Konterelement verdrehbar sein. Stangenelement und Konterelement können auch beide nicht ortsfest und relativ zueinander verdrehbar sein.

Das Verdrehen bewirkt eine Pressung bzw. Quetschung des flexiblen Elements in Längsrichtung des Stangenelements und/oder Konterelements. Durch die Quetschung wird das flexible Element nach außen hin aufgeweitet und bewirkt einen Verschluss des Ankerlochs. Die Drehung des Stangenelements bzw. Konterelements wird dabei nicht an das flexible Element weitergegeben. Dies wird durch das erste Drehelement ermöglicht, das mittelbar oder unmittelbar an dem Stangenelement und/oder Konterelement, sowie dem ersten flexiblen Element anliegt. Das erste flexible Element kann dadurch torsionsfrei aufgeweitet werden und das Ankerloch wasserdicht verschließen.
Das Konterelement ist vorzugsweise in Form einer Schraubenmutter, das erste Drehelement vorzugsweise in Form einer Unterlegscheibe ausgebildet. Stangenelement, erstes Drehelement und Konterelement sind vorzugsweise aus Metall, insbesondere Stahl, ausgebildet. Das flexible Element besteht vorzugsweise aus Dichtgummi, insbesondere aus Naturkautschuk.
Es versteht sich, dass zusätzlich zu dem ersten flexiblen Element weitere flexible Elemente an dem ersten Dichtungsstopfen vorgesehen sein können. In einer Ausgestaltung der Erfindung weist der erste Dichtungsstopfen zumindest ein zweites flexibles Element auf, das durch ein erstes Trennelement von dem ersten flexiblen Element getrennt ist, wobei das erste Trennelement unverdrehbar zur Längsachse des Stangenelements ausgebildet ist. Durch das erste Trennelement kann eine Torsion der flexiblen Elemente bei einer Drehung des Stangenelements relativ zum Konterelement, d.h. bei der Befestigung des ersten Dichtungsstopfens, besonders zuverlässig verhindert werden. Ein Verdrehen des ersten Trennelements, relativ zum Stangenelement kann dabei durch einen zumindest teilweisen Formschluss des ersten Trennelements mit dem Stangenelement vermieden werden.

Hierzu weist das Stangenelement zumindest abschnittsweise an zumindest einer Seite, insbesondere an zwei gegenüberliegenden Seiten, in Längsrichtung des Stangenelements flach ausgebildet sein, wobei das erste Trennelement eine Durchgangsausnehmung auf, deren Querschnitt durch eine Spielpassung oder Presspassung dem Querschnitt des Stangenelements senkrecht zu dessen Längsrichtung in dem Bereich angepasst ist, in dem das Stangenelement zumindest abschnittsweise flach ausgebildet ist. Eine solche Passung zwischen erstem Trennelement und Stangenelement ist besonders kostengünstig herstellbar. Im Falle einer Presspassung zwischen erstem Trennelement und Stangenelement ist das erste Trennelement nicht in Längsrichtung des Stangenelements verschiebbar. Im Falle einer Spielpassung ist das erste Trennelement in Längsrichtung des Stangenelements verschiebbar, so dass das erste flexible Element und das zweite flexible Element bei einer Drehung des Stangenelements relativ zum Konterelement gleich stark gepresst werden. Es versteht sich, dass der erste Dichtungsstopfen zusätzlich zu dem ersten flexiblen Element und dem zweiten flexiblen Element weitere flexible Elemente und weitere Trennelemente aufweisen kann. Vorzugsweise weist der erste Dichtungsstopfen drei Trennelemente auf, die vier flexible Elemente voneinander trennen. Hierdurch kann eine besonders hohe Wasserundurchlässigkeit erzielt werden.

Ein Tordieren des ersten flexiblen Elements beim Verdrehen des Stangenelements relativ zum Konterelement kann besonders zuverlässig dadurch vermieden werden, dass der erste Dichtungsstopfen ein relativ zum Stangenelement und/oder Konterelement um die Längsachse des Stangenelements und/oder Konterelements rotierbares zweites Drehelement aufweist, das mittelbar oder unmittelbar an dem Stangenelement oder Konterelement und dem ersten flexiblen Element anliegt.

Das Stangenelement kann im Wesentlichen in Form einer Gewindestange ausgebildet sein. Vorzugsweise ist das Stangenelement in Form einer Schraube mit einem Schraubenkopf und/oder einem Innenmehrkant ausgebildet. Durch den Einsatz eines Stangenelements in Form einer Schraube kann der erste Dichtungsstopfen sehr kostengünstig produziert werden.

Der erste Dichtungsstopfen weist vorzugsweise eine erste Hülse auf, die zumindest teilweise von dem Stangenelement durchdrungen wird, wobei das erste flexible Element an der ersten Hülse mittelbar oder unmittelbar anliegt. Hierdurch kann sich das erste flexible Element beim Verdrehen des Stangenelements relativ zum Konterelement nicht in Richtung des Stangenelements ausweiten. Das erste flexible Element drückt somit in eingebautem Zustand des ersten Dichtungsstopfens nicht auf das Stangenelement. Das erste flexible Element reibt dadurch nicht an dem Stangenelement beim Verdrehen des Stangenelements relativ zum Konterelement, wodurch sowohl ein Tordieren des ersten flexiblen Elements, als auch eine Beschädigung des ersten flexiblen Elements durch das Stangenelement zuverlässig vermieden wird.

Die erste Hülse kann in ihrer Längsrichtung konisch ausgebildet sein. Hierdurch kann das erste flexible Element in Längsrichtung des ersten Dichtungsstopfens ungleichmäßig aufgeweitet werden, wodurch insbesondere der Verschluss von konischen Ankerlöchern erleichtert wird.

Das Konterelement kann in Form einer zweiten Hülse, insbesondere in Form einer Sacklochhülse, ausgebildet sein. Das Stangenelement kann dadurch mit einem ersten Gewinde des ersten Gewindestangenabschnitts in das zweite Gewinde des hülsenförmigen Konterelements eingreifen. Das erste Gewinde und das zweite Gewinde wird dabei aufgrund der hülsenförmigen Ausbildung des Konterelements vor Umwelteinflüssen, insbesondere vor Wasser, geschützt.

In einer Ausgestaltung der Erfindung weist das Stangenelement einen zweiten Gewindestangenabschnitt mit einem dritten Gewinde auf, das in ein viertes Gewinde des ersten Drehelements eingreift, wobei das erste sowie das zweite Gewinde gegenläufig zu dem dritten und vierten Gewinde ausgebildet sind. Beispielsweise kann das erste Gewinde und das zweite Gewinde in Form eines Rechtsgewindes und das dritte und vierte Gewinde in Form eines Linksgewindes ausgebildet sein. Alternativ dazu kann das erste und das zweite Gewinde in Form eines Linksgewindes und das dritte und vierte Gewinde in Form eines Rechtsgewindes ausgebildet sein. Hierdurch bewirkt eine Drehung des Stangenelements relativ zum Konterelement eine in Längsrichtung des ersten Dichtungsstopfens gegenläufige Bewegung des Konterelements relativ zum ersten Drehelement. Mit anderen Worten wird nur das Stangenelement gedreht, während Konterelement und Drehelement nicht relativ zum Ankerloch gedreht werden. Das erste flexible Element kann dabei mittelbar oder unmittelbar an dem Konterelement und dem Drehelement anliegen. Durch die gegenläufigen Gewinde wird ein Tordieren des ersten flexiblen Elements beim Spannen des ersten Dichtungsstopfens im Ankerloch besonders wirksam verhindert.

Die erfindungsgemäß beschriebenen Drehelemente, unabhängig von der jeweiligen Ausführungsform, können in ihrer axialen Erstreckung konisch ausgebildet sein. Zusätzlich können die Drehelemente derart ausgebildet sein, dass sie mittels eines Werkzeugs drehstabil dann gehalten werden können, wenn der Dichtungsstopfen aktiviert wird, d.h., im Ankerloch dieses abdichtend verpresst wird. Beispielsweise können an dem Anschlag eines Drehelements Bohrungen vorgesehen sein, in die ein Werkzeug einführbar sind. Das erste flexible Element kann bei Bedarf eine Durchgangsausnehmung aufweisen, die rotationsunsymmetrisch zu ihrer Längsachse ausgebildet ist. Die Konizitäten der Drehelemente können in axialer Richtung verjüngend oder erweiternd aufeinander zulaufen.

Die obige Aufgabe kann weiterhin durch einen zweiten, der nicht Teil der Erfindung ist, Dichtungsstopfen zum Verschließen von Ankerlöchern, insbesondere von konischen Ankerlöchern, in Betonwänden gelöst werden, wobei der zweite Dichtungsstopfen zumindest einen fluidisch mit einem ersten Hohlraum des zweiten Dichtungsstopfens verbundenen ersten Auslass sowie einen Einlass aufweist, der fluidisch mit dem ersten Hohlraum verbunden oder fluidisch mit dem ersten Hohlraum verbindbar ist.
Eine Dichtmasse kann durch den Einlass des zweiten Dichtungsstopfens in den ersten Hohlraum des zweiten Dichtungsstopfens und von dort weiter durch den zumindest einen ersten Auslass zwischen den zweiten Dichtungsstopfen und das Ankerloch gespritzt werden. Der Einlass kann dabei als Durchgangsausnehmung ausgebildet sein. Alternativ dazu kann an dem Einlass eine Materialverdünnung des zweiten Dichtungsstopfens vorgesehen sein, so dass der Einlass mit der Kanüle einer Spritze bei Verwendung des zweiten Dichtungsstopfens durchstoßen werden kann.

Auf Grund der aus dem zweiten Dichtungsstopfen austretenden Dichtmasse wird ein wasserdichter dauerhafter Verschluss des zweiten Dichtungsstopfens in einem Ankerloch gewährleistet. Dabei kann auch ein unförmig ausgebildetes Ankerloch zuverlässig abgedichtet werden, da sich die Dichtmasse in den Zwischenraum zwischen Ankerloch und zweitem Dichtungsstopfen einfügt. Der Einlass kann einfach oder kreuzweise geschlitzt ausgebildet sein. Als Dichtmasse können Polyurethane (PU), Harz, Quellmörtel und/oder andere wasserfeste Dichtmassen, beispielsweise von Sika oder Delo eingesetzt werden. Der zweite Dichtungsstopfen ist vorzugsweise einteilig, insbesondere aus Kunststoff, ausgebildet. Hierdurch kann der zweite Dichtungsstopfen besonders kostengünstig produziert werden.

Ein besonders gleichmäßiges Abdichten des Ankerlochs kann dadurch erzielt werden, dass der zweite Dichtungsstopfen mehrere Auslässe aufweist, die fluidisch mit dem ersten Hohlraum verbunden sind. Hierdurch können alle Zwischenräume zwischen dem Ankerloch und dem in das Ankerloch eingeschobenen zweiten Dichtungsstopfen schnell und zuverlässig mit Dichtmasse gefüllt werden.

Vorzugsweise ist eine Vielzahl von Auslässen an dem Dichtungsstopfen vorgesehen, die fluidisch mit dem ersten Hohlraum verbunden sind, um ein schnelles und vollständiges Ausfüllen der Zwischenräume zwischen dem Ankerloch und dem zweiten Dichtungsstopfen zu gewährleisten.

Der zweite Dichtungsstopfen kann zumindest einen senkrecht zur Längsachse des zweiten Dichtungsstopfens ausgebildeten ersten Vorsprung aufweisen. Der erste Vorsprung ist dabei vorzugsweise so dünn ausgebildet, dass er bei einem Einschieben des zweiten Dichtungsstopfens in das zu verschließende Ankerloch zurückfedert. In diesem Fall können Ankerlöcher mit einheitlichen zweiten Dichtungsstopfen abgedichtet werden. Dabei sind an dem zweiten Dichtungsstopfen vorzugsweise mehrere senkrecht zur Längsachse des zweiten Dichtungsstopfens ausgebildete Vorsprünge vorgesehen.

Der erste Auslass ist vorzugsweise senkrecht zur Längsachse des zweiten Dichtungsstopfens ausgebildet. Hierdurch können beim Verschließen des Ankerlochs die Zwischenräume zwischen dem zweiten Dichtungsstopfen und dem Ankerloch schnell mit Dichtmasse aufgefüllt werden.

Sowohl der erste Dichtungsstopfen als auch der zweite Dichtungsstopfen sind vorzugsweise axialsymmetrisch zu ihrer Längsachse ausgebildet. Hierdurch können röhrenartige Ankerlöcher besonders einfach und effektiv abgedichtet werden.

Die Erfindung betrifft schließlich eine Betonwand mit einem Ankerloch und einem im Ankerloch befestigten zuvor beschriebenen ersten Dichtungsstopfen und/oder zweiten Dichtungsstopfen.
Weitere Merkmale und Vorteile der Erfindung ergeben sich aus der nachfolgenden detaillierten Beschreibung mehrerer Ausführungsbeispiele der Erfindung, anhand der Figuren der Zeichnung, die erfindungswesentliche Einzelheiten zeigt sowie aus den Ansprüchen.
Die in der Zeichnung dargestellten Merkmale sind nicht notwendigerweise maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

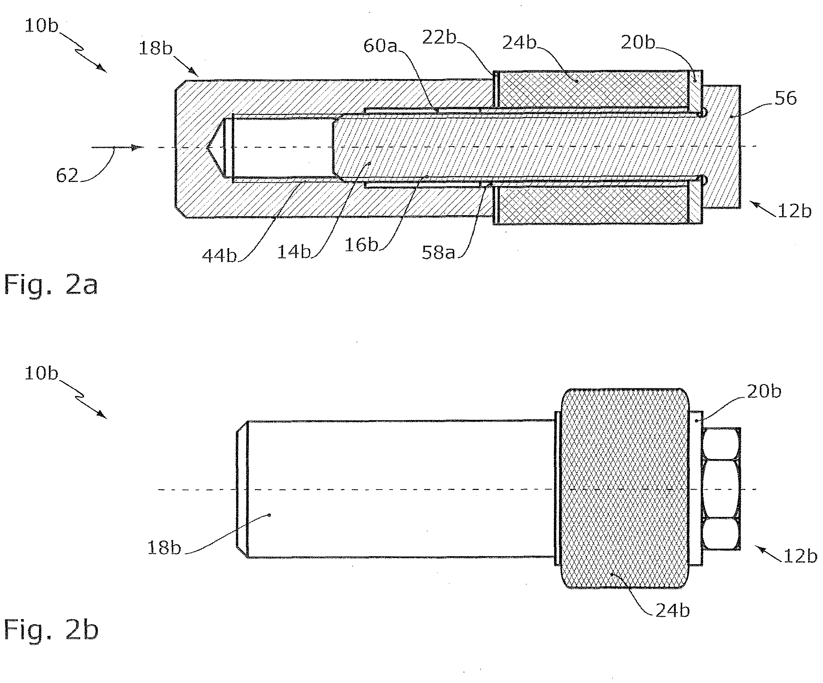

In der schematischen Zeichnung sind sechs Ausführungsbeispiele dargestellt und in der nachfolgenden Beschreibung näher erläutert. Die Ausführungsbeispiele der Figuren 2a-2b, 3, 5a-5c und 6a-6c sind nicht Teil der Erfindung.

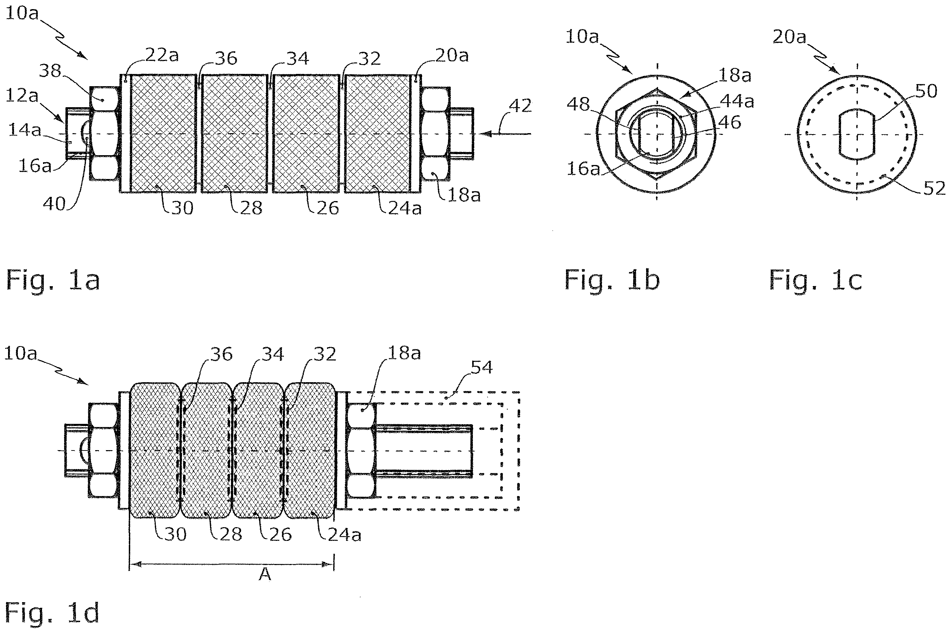

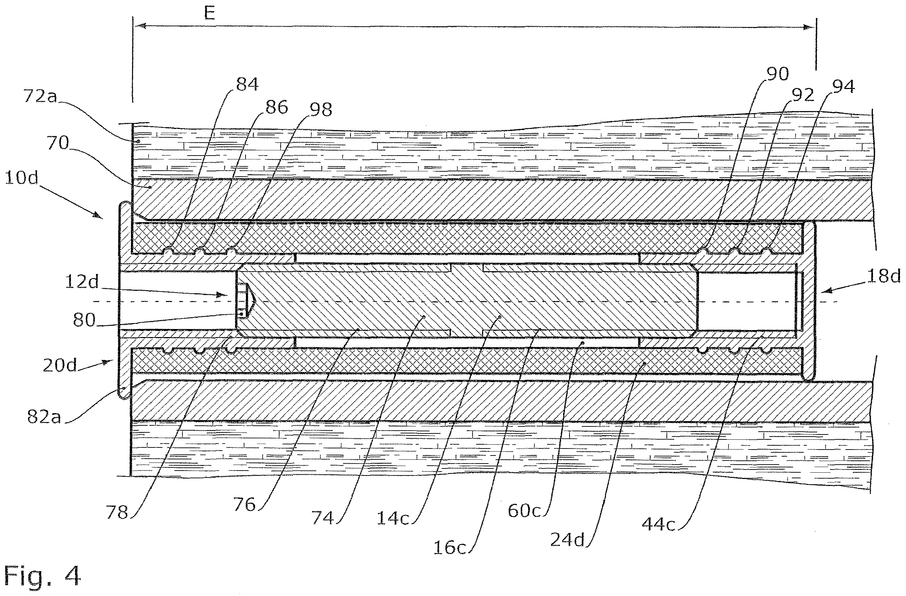

Die Ausführungsbeispiele der Figuren 1a-1d, 4 sind Teil der Erfindung.

Die in der Zeichnungsbeschreibung verwendeten Begriffe "erster Dichtungsstopfen" und "zweiter Dichtungsstopfen" beziehen sich dabei nicht notwendigerweise auf den zuvor beschriebenen "ersten Dichtungsstopfen" und "zweiten Dichtungsstopfen". Der nachfolgend beschriebene erste, zweite, dritte, vierte und sechste Dichtungsstopfen bezieht sich vielmehr primär auf den zuvor beschriebenen ersten Dichtungsstopfen, der nachfolgend beschriebene fünfte Dichtungsstopfen bezieht sich primär auf den zuvor beschriebenen zweiten Dichtungsstopfen.

Es zeigen:
- Fig. 1a: eine Seitenansicht eines ersten Dichtungsstopfens;
- Fig. 1b: eine Vorderansicht des ersten Dichtungsstopfens aus Fig. 1a;
- Fig. 1c: ein erstes Drehelement des ersten Dichtungsstopfens;
- Fig. 1d: eine Seitenansicht des ersten Dichtungsstopfens gemäß Fig. 1a in gespanntem Zustand;
- Fig. 2a: eine geschnittene Seitenansicht eines zweiten Dichtungsstopfens;
- Fig. 2b: eine Seitenansicht des zweiten Dichtungsstopfens gemäß Fig.2a in gespanntem Zustand;
- Fig. 3: eine geschnittene Seitenansicht eines dritten Dichtungsstopfens;
- Fig. 4: eine geschnittene Seitenansicht eines vierten Dichtungsstopfens in einem Ankerloch;
- Fig. 5a: eine geschnittene Seitenansicht eines fünften Dichtungsstopfens;
- Fig. 5b: eine Vorderansicht des fünften Dichtungsstopfens gemäß Fig. 5a;
- Fig. 5c: eine geschnittene Seitenansicht des fünften Dichtungsstopfens gemäß Fig. 5a in eingebautem Zustand in einem Ankerloch;
- Fig. 6a: eine Seitenansicht eines sechsten Dichtungsstopfens;
- Fig. 6b: eine Vorderansicht des ersten Dichtungsstopfens aus Fig. 6a; und
- Fig. 6c: eine Seitenansicht des sechsten Dichtungsstopfens gemäß Fig. 6a in gespanntem Zustand.

Figur 1a zeigt einen ersten Dichtungsstopfen 10a mit einem Stangenelement 12a, das einen ersten Gewindestangenabschnitt 14a mit einem ersten Gewinde 16a aufweist. Das Stangenelement 12a ist mit einem Konterelement 18a in Form einer Mutter verschraubt. Das Konterelement 18a liegt an einem ersten Drehelement 20a in Form einer Scheibe mit Durchgangsausnehmung an. Das Stangenelement 12a liegt an einem zweiten Drehelement 22a an, das identisch zu dem ersten Drehelement 20a ausgebildet ist.

Zwischen dem ersten Drehelement 20a und dem zweiten Drehelement 22a sind ein erstes flexibles Element 24a, ein zweites flexibles Element 26, ein drittes flexibles Element 28 und ein viertes flexibles Element 30 angeordnet. Das erste Drehelement 20a liegt unmittelbar an dem ersten flexiblen Element 24a an. Das zweite Drehelement 22a liegt mittelbar an dem ersten flexiblen Element 24a an. Die flexiblen Elemente 24a, 26, 28, 30 sind jeweils in Form eines Gummischlauchs bzw. Gummirings ausgebildet. Das erste flexible Element 24a ist durch ein erstes Trennelement 32 von dem zweiten flexiblen Element 26 getrennt. Das zweite flexible Element 26 ist durch ein zweites Trennelement 34 von dem dritten flexiblen Element 28 getrennt. Das dritte flexible Element 28 ist durch ein drittes Trennelement 36 von dem vierten flexiblen Element 30 getrennt. Das erste Trennelement 32, das zweite Trennelement 34, sowie das dritte Trennelement 36 sind identisch in Form einer Scheibe mit einer Durchgangsausnehmung ausgebildet, durch die das Stangenelement 12a geführt ist.

Das Stangenelement 12a weist eine Mutter 38 auf, die durch einen Schweißpunkt 40 an dem ersten Gewindestangenabschnitt 14a angeheftet ist. Der erste Dichtungsstopfen 10a ist axialsymmetrisch zu seiner Längsachse ausgebildet.

Figur 1b zeigt den ersten Dichtungsstopfen 10a in Draufsicht auf die Längsrichtung des ersten Dichtungsstopfens 10a, d.h. in Richtung eines ersten Pfeils 42 gemäß Fig. 1a. Aus Figur 1b ist ersichtlich, dass das Konterelement 18a ein zweites Gewinde 44a aufweist, das in das erste Gewinde 16a des Stangenelements 12a eingreift. Das Stangenelement 12a weist in dessen Längsrichtung eine erste abgeflachte Seite 46 und eine zweite abgeflachte Seite 48 auf.

Figur 1c zeigt das erste Drehelement 20a aus Sicht des ersten Pfeils 42 gemäß Figur 1a. Das erste Drehelement 20a weist eine Durchgangsausnehmung 50 auf, deren Querschnitt in Form einer Spielpassung dem Querschnitt des Stangenelements 12a (siehe Figur 1b) senkrecht zur dessen Längsrichtung in dem Bereich angepasst ist, in dem das Stangenelement 12a zumindest abschnittsweise flach ausgebildete Seiten 46, 48 aufweist. Das erste Drehelement 20a ist dadurch in Längsrichtung des ersten Dichtungsstopfens 10a verschiebbar, aber nicht auf dem Stangenelement 12a verdrehbar.

In Figur 1c ist weiterhin eine strichpunktierte Linie 52 dargestellt, die den Außenumfang der Trennungselemente 32, 34, 36 andeutet. Im Übrigen weisen die Trennungselemente 32, 34, 36 den gleichen Querschnitt auf, wie das erste Drehelement 20a. Die Trennungselemente 32, 34, 36 sind daher ebenfalls in Längsrichtung des ersten Dichtungsstopfens 10a verschiebbar, aber nicht um die Längsachse des Stangenelements 12a verdrehbar. Hierdurch werden die zwischen den Drehelementen 20a, 22a, sowie den Trennelementen 32, 34, 36 angeordneten flexiblen Elemente 24a, 26, 28, 30 bei einem Drehen des Konterelements 18a ebenfalls nicht verdreht. Ein Tordieren der flexiblen Elemente 24a, 26, 28, 30 wird effektiv vermieden. Hierdurch können die flexiblen Elemente 24a, 26, 28, 30 in gespanntem Zustand auch nicht, betrachtet über einen längeren Zeitraum, zurücktordieren. Der erste Dichtungsstopfen 10a bleibt dadurch stets gleich stark gespannt, wodurch ein Ankerloch (nicht gezeigt), in das der erste Dichtungsstopfen 10a eingeführt ist, dauerhaft wasserdicht und/oder fluiddicht verschlossen werden kann.

Figur 1d zeigt den ersten Dichtungsstopfen 10a gemäß Fig. 1a in gespanntem Zustand. Zum Spannen des ersten Dichtungsstopfens 10a wird auf das Konterelement 18a eine Hohlnuss 54 (strichpunktiert dargestellt) aufgesetzt und im Uhrzeigersinn um die Längsache des ersten Dichtungsstopfens 10a gedreht. Hierdurch werden die flexiblen Elemente 24a, 26, 28, 30 in Längsrichtung des ersten Dichtungsstopfens 10a gepresst, wodurch sich die flexiblen Elemente 24a, 26, 28, 30 senkrecht zur Längsrichtung, d.h., radial von der Längsachse des ersten Dichtungsstopfens 10a weg weisend ausdehnen. Dabei werden die Trennelemente 32, 34, 36 von den flexiblen Elementen 24a, 26, 28, 30 umschlossen. Hierdurch kann eine Abdichtung eines Ankerlochs (nicht gezeigt) auf einer Länge A von mehr als 50mm erreicht werden.

Figur 2a zeigt eine geschnittene Seitenansicht eines zweiten Dichtungsstopfens 10b mit einem Stangenelement 12b, das einen ersten Gewindestangenabschnitt 14b mit einem ersten Gewinde 16b aufweist. Das erste Gewinde 16b greift in ein zweites Gewinde 44b eines Konterelements 18b ein. Das Stangenelement 12b ist in Form einer Schraube mit einem Schraubenkopf 56 ausgebildet. Der Schraubenkopf 56 liegt an einem ersten Drehelement 20b an. Das Stangenelement 12b ist um die Längsachse des zweiten Dichtungsstopfens 10b relativ zu dem ersten Drehelement 20b frei drehbar.

Zwischen dem ersten Drehelement 20b und einem zweiten Drehelement 22b ist ein erstes flexibles Element 24b angeordnet. Das erste flexible Element 24b ist in Form eines Gummischlauchs ausgebildet und auf eine erste Hülse 58a aufgezogen. Die erste Hülse 58a ist in Form einer Gleithülse ausgebildet. Die erste Hülse 58a ist in einem Schiebebereich 60a (zusätzlicher Hohlraum) des Konterelements 18b verschiebbar, das in Form einer zweiten Hülse ausgebildet ist. Eine Drehung des Stangenelements 12b um die Längsachse des zweiten Dichtungsstopfens 10b bewirkt somit ein "Heranziehen" des Konterelements 18b in Richtung eines zweiten Pfeils 62 entlang der Längsachse des zweiten Dichtungsstopfens 10b. Der zweite Dichtungsstopfen 10b ist axialsymmetrisch zu seiner Längsachse ausgebildet.

Figur 2b zeigt den zweiten Dichtungsstopfen 10b, wobei das Stangenelement 12b fast vollständig in das Konterelement 18b eingeschraubt ist. Hierdurch wird das erste flexible Element 24b in Längsrichtung des zweiten Dichtungsstopfens 10b gepresst bzw. gequetscht, wodurch der Außenumfang des ersten flexiblen Elements 24b aufgeweitet wird (sich vergrößert). Da der Schraubenkopf 56 relativ zu dem ersten Drehelement 20b leicht drehbar ist, wird ein Tordieren des ersten flexiblen Elements 24b vermieden. Hierdurch wird eine dauerhafte flüssigkeitsdichte und/oder fluiddichte Abdichtung erzielt. Der zweite Dichtungsstopfen 10b ist dabei - wie aus Figur 2b ersichtlich - besonders kompakt ausgebildet.

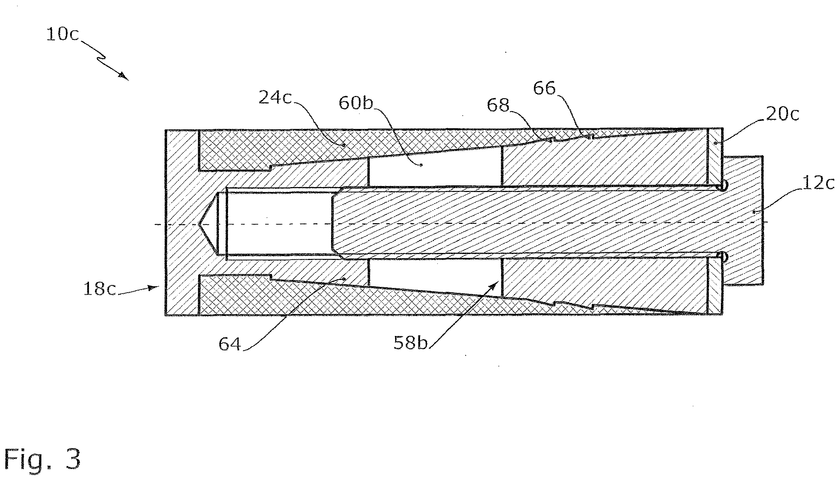

Figur 3 zeigt eine geschnittene Seitenansicht eines dritten Dichtungsstopfens 10c. Der dritte Dichtungsstopfen 10c ist axialsymmetrisch zu seiner Längsachse ausgebildet. Der dritte Dichtungsstopfen 10c weist ein Stangenelement 12c in Form einer Schraube auf, wobei das Stangenelement 12c in ein Konterelement 18c eingeschraubt ist. Das Stangenelement 12c ist durch ein erstes Drehelement 20c und eine erste Hülse 58b mit Spiel gegenüber der Schraube hindurchgeführt. Das Konterelement 18c ist in Form einer zweiten Hülse mit Innengewinde ausgebildet. Die erste Hülse 58b ist an ihrer radialen Außenseite im Wesentlichen konisch ausgebildet. Ebenso weist das Konterelement 18c einen im Wesentlichen konisch ausgebildeten Bereich 64 auf. Ein erstes flexibles Element 24c ist im Wesentlichen schlauchförmig ausgebildet und an seiner radialen Innenseite an die Konizität der ersten Hülse 58b und des Konterelements 18c im konisch ausgebildeten Bereich 64 angepasst.

Zwischen der ersten Hülse 58b und dem Konterelement 18c ist ein Schiebebereich 60b (Hohlraum) vorgesehen. Beim Eindrehen des Stangenelements 12c wird das Konterelement 18c in Richtung der ersten Hülse 58b gezogen (der Schiebebereich 60b verkürzt sich in seiner axialen Länge und der Hohlraum verkleinert sich). Das erste flexible Element 24c wird dadurch nach außen gewölbt (vergrößert sich in radialer Richtung). Eine erste Stufe 66 und eine zweite Stufe 68 an der ersten Hülse 58b verhindern ein "Zurückrutschen" des ersten flexiblen Elements 24c im eingebauten Zustand des dritten Dichtungsstopfens 10c.

Ein Tordieren des ersten flexiblen Elements 24c beim Einbau des dritten Dichtungsstopfens 10c wird dabei dadurch verhindert, dass das Stangenelement 12c um die Längsachse des dritten Dichtungsstopfens 10c relativ zu dem ersten Drehelement 20c und der ersten Hülse 58b verdrehbar ist. Weiterhin sind an der konischen Fläche der ersten Hülse 58b in Längsrichtung des dritten Dichtungsstopfens 10c Nocken (nicht gezeigt) vorgesehen, die ein Tordieren des ersten flexiblen Elements 24c bei der Installation des dritten Dichtungsstopfens 10c verhindern.

Figur 4 zeigt einen vierten Dichtungsstopfen 10d, der axialsymmetrisch zu seiner Längsachse ausgebildet ist. Der vierte Dichtungsstopfen 10d ist in ein Hüllrohr 70 eingeführt, das bei der Herstellung einer Betonwand 72a in Schalungstechnik nach dem Aushärten des Betons in der Betonwand 72a verblieben ist. Der vierte Dichtungsstopfen 10d weist ein Stangenelement 12d mit einem ersten Gewindestangenabschnitt 14c auf. In dem ersten Gewindestangenabschnitt 14c ist ein erstes Gewinde 16c ausgebildet. Das erste Gewinde 16c greift in ein zweites Gewinde 44c eines Konterelements 18d ein. Das Stangenelement 12d weist weiterhin einen zweiten Gewindestangenabschnitt 74 mit einem dritten Gewinde 76 auf, das in ein viertes Gewinde 78 eines ersten Drehelements 20d eingreift. Das erste Drehelement 20d ist in Form einer ersten Hülse ausgebildet. Das Konterelement 18d ist in Form einer zweiten Hülse ausgebildet. Zwischen dem Konterelement 18d und dem ersten Drehelement 20d befindet sich ein Schiebebereich 60c (Hohlraum). Ein erstes flexibles Element 24d ist an dem Konterelement 18d und dem ersten Drehelement 20d angeordnet.

Das erste Gewinde 16c und das zweite Gewinde 44c sind in Form eines Rechtsgewindes ausgebildet. Das dritte Gewinde 76 und das vierte Gewinde 78 sind in Form eines Linksgewindes ausgebildet. Durch eine Drehung des Stangenelements 12d um die Längsachse des vierten Dichtungsstopfens 10d im Uhrzeigersinn wird somit das Konterelement 18d in Richtung des ersten Drehelements 20d gezogen. Zur Betätigung des Gewindelements 12d weist das Stangenelement 12d einen Innenmehrkant 80 in Form eines Innensechskants auf, in den ein passender Inbusschlüssel eingeführt werden kann.

Der vierte Dichtungsstopfen 10d weist an seinem ersten Drehelement 20d einen Anschlag 82a auf, der verhindert, dass der vierte Dichtungsstopfen 10d beim Drehen des Stangenelements 12d in das Hüllrohr 70 gezogen wird. Der vierte Dichtungsstopfen 10d bleibt dadurch gut zugängig und kann bei Bedarf einfach wieder aus dem Hüllrohr 70 entfernt werden. Der Anschlag 82a kann in einer weiteren Ausführungsform noch weiter in radialer Richtung vergrößert sein, so dass er an der Außenoberfläche der Betonwand 72a anliegt und sich dort auch abstützt.

An dem ersten Drehelement 20d ist eine erste Rippe 84, eine zweite Rippe 86 und eine dritte Rippe 88 vorgesehen. Weiterhin sind an dem Konterelement 18d eine vierte Rippe 90, eine fünfte Rippe 92 und eine sechste Rippe 94 vorgesehen. Die Rippen 84, 86, 88, 90, 92, 94 sind umlaufend ausgebildet und ermöglichen ein definiertes "Aufwerfen" des ersten flexiblen Elements 24d beim Spannen (nicht gezeigt) des vierten Dichtungsstopfens 10d.

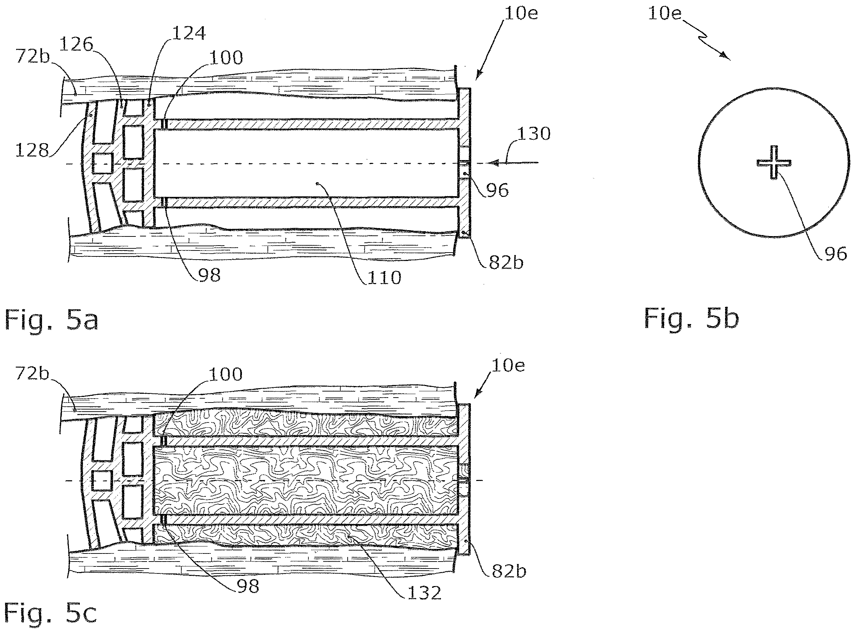

Figur 5a zeigt eine geschnittene Seitenansicht eines fünften Dichtungsstopfens 10e. Der fünfte Dichtungsstopfen 10e ist einteilig aus Kunststoff ausgebildet. Der fünfte Dichtungsstopfen 10e ist in ein Ankerloch einer Betonwand 72b eingeführt. Der fünfte Dichtungsstopfen 10e ist axialsymmetrisch zu seiner Längsachse ausgebildet. Der fünfte Dichtungstopfen 10e liegt durch einen Anschlag 82b an der Betonwand 72b an. Der Anschlag 82b verhindert dabei ein vollständiges Einführen des fünften Dichtungsstopfens 10e in das Ankerloch.

Der fünfte Dichtungsstopfen 10e weist einen Einlass 96, einen ersten Auslass 98 und einen zweiten Auslass 100 auf. Der erste Auslass 98 und der zweite Auslass 100 sind über einen ersten Hohlraum 110 mit dem Einlass 96 fluidisch verbunden.

Der fünfte Dichtungsstopfen 10e weist einen ersten senkrecht zur Längsachse des fünften Dichtungsstopfens ausgebildeten ersten Vorsprung 124, einen zweiten Vorsprung 126 und einen dritten Vorsprung 128 auf. Die Vorsprünge 124, 126, 128 sind flexibel ausgebildet, so dass der fünfte Dichtungsstopfen 10e in Ankerlöcher unterschiedlichen Durchmessers eingesetzt werden kann.

Die Vorsprünge 124, 126, 128 bilden zusammen mit den Auslässen 98 und 100 eine käfigartige Ausbildung der Spitze (dem freien Ende, das dem Anschlag 82b gegenüber liegt) des fünften Dichtungsstopfens 10e.

Figur 5b zeigt eine Draufsicht auf den fünften Dichtungsstopfen 10e in Richtung eines dritten Pfeils 130 gemäß Figur 5a. In Figur 5b ist der kreuzförmig geschlitzte Einlass 96 des fünften Dichtungsstopfens 10e erkennbar. Alternativ zu der dargestellten Ausführung kann der Einlass 96 derart ausgebildet sein, dass der fünfte Dichtungsstopfen 10e zum Einfüllen einer Dichtmasse im Bereich des Einlasses 96 erst mit der Kanüle einer Spritze durchstoßen werden muss.

In Figur 5c ist der fünfte Dichtungsstopfen 10e gemäß Figur 5a mit darin eingespritzter Dichtmasse 132 dargestellt. Da die Auslässe 98, 100 senkrecht zur Längsachse des fünften Dichtungsstopfens 10e ausgebildet sind, kann ein sehr gleichmäßiges Auffüllen der Zwischenräume zwischen dem fünften Dichtungsstopfen 10e und der Betonwand 72b mit der Dichtmasse 132 erreicht werden. Der Anschlag 82b verhindert dabei ein Herauslaufen der Dichtmasse 132.

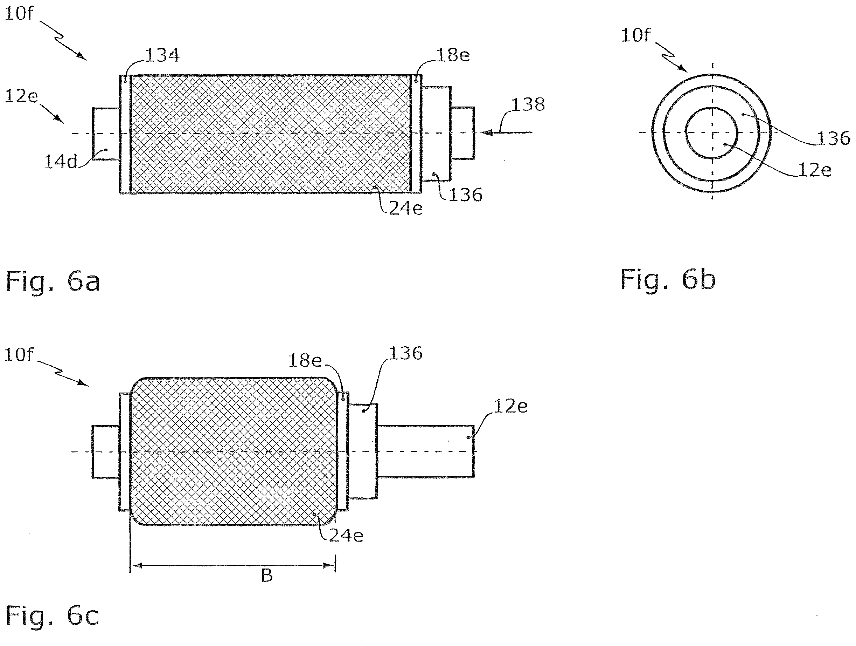

In Figur 6a ist ein sechster Dichtungsstopfen 10f gezeigt. Der sechste Dichtungsstopfen 10f weist ein Stangenelement 12e auf. Das Stangenelement 12e weist einen Stangenabschnitt 14d auf, der fest mit einer ersten Scheibe 134 verbunden ist. Der Stangenabschnitt 14d ist in Form eines Zylinders, d.h. einer gewindefreien Rundstange ausgeführt. Ein Konterelement 18e in Form einer zweiten Scheibe weist eine Durchgangsausnehmung (nicht gezeigt) auf und ist in Längsrichtung des Stangenelements 12 relativ zu dem Stangenelement 12 verschiebbar. Zwischen der ersten Scheibe 134 und dem Konterelement 18e ist ein erstes flexibles Element 24e in Form eines Gummischlauchs angeordnet.

Der Dichtungsstopfen 10f weist weiterhin eine Klemmscheibe 136 auf, die eine zentrale Durchgangsausnehmung aufweist (nicht gezeigt). Die Durchgangsausnehmung wird von dem Stangenelement 12e durchdrungen. Die Klemmscheibe 136 ist dabei derart an das Stangenelement 12e angepasst, dass die Klemmscheibe 136 relativ zu dem Stangenelement 12e verklemmbar ist. Hierzu kann die zentrale Durchgangsausnehmung der Klemmscheibe 136 beispielsweise durch eine Presspassung an die Kontur des Stangenabschnitts 14d angepasst sein. Alternativ oder zusätzlich dazu kann der Stangenabschnitt 14d "ratschenartige" Vorsprünge aufweisen (nicht gezeigt), an die die Durchgangsausnehmung der Klemmscheibe 134 angepasst ist. Hierdurch kann eine von Kabelbindern bekannte Befestigung der Klemmscheibe 134 an dem Stangenabschnitt 14d erzielt werden.

Figur 6b zeigt den sechsten Dichtungsstopfen 10f in Richtung eines vierten Pfeils 138 gemäß Figur 6a. Dabei ist ersichtlich, dass der sechste Dichtungsstopfen rotationssymmetrisch zur Längsachse ausgebildet ist.

Fig. 6c zeigt den sechsten Dichtungsstopfen 10f in gespanntem Zustand. Das Konterelement 18e ist in diesem Fall zusammen mit der Klemmscheibe 136 relativ zur Längsachse des Stangenelements 12e nach links verschoben. Hierdurch wird das erste flexible Element 24e in Längsrichtung des Stangenelements 12e gepresst und radial zur Längsrichtung des Stangenelements 12e aufgeweitet, sodass eine Abdichtung über eine Länge B erfolgen kann. Das flexible Element 24e wird durch ein Verklemmen der Klemmscheibe 136 an dem Stangenelement 12e in der dargestellten zusammengepressten Stellung gehalten.

## Patentansprüche

1. Dichtungsstopfen (10a-10d, 10f) zum Verschließen von Ankerlöchern, insbesondere von konischen Ankerlöchern, in Betonwänden (72a),
mit einem Stangenelement (12a-12e), das zumindest einen Stangenabschnitt (14a-14d) aufweist, der in ein Konterelement (18a-18e) eingreift, wobei der Dichtungsstopfen (10a-10d, 10f) ein erstes flexibles Element (24a-24e) aufweist, das in Längsrichtung oder parallel zur Längsrichtung des Stangenelements (12a-12e) durch eine Bewegung des Stangenelements (12a-12e) relativ zum Konterelement (18a-18e) entlang der Längsachse des Stangenelements (12a-12e) und/oder Konterelements (18a-18e) pressbar ist, wobei
das erste flexible Element (24a-24e) entlang der Längsachse des Stangenelements (12a-12e) drehfrei verschiebbar ist und das erste flexible Element (24a-24e) mittelbar oder unmittelbar an dem Stangenelement (12a-12e) und/oder Konterelement (18a-18e) anliegt, **dadurch gekennzeichnet, dass**
a) der Dichtungsstopfen (10a) zumindest ein zweites flexibles Element (26) aufweist, das durch ein erstes Trennelement (32) von dem ersten flexiblen Element (24) getrennt ist, wobei das erste Trennelement (32) unverdrehbar zur Längsachse des Stangenelements (12a) ausgebildet ist, wobei das Stangenelement (12a) zumindest abschnittsweise an zumindest einer Seite (46, 48) in Längsrichtung des Stangenelements (12a) flach ausgebildet ist, wobei das erste Trennelement (32) eine Durchgangsausnehmung aufweist, deren Querschnitt durch eine Spielpassung oder Presspassung dem Querschnitt des Stangenelements (12a) senkrecht zu dessen Längsrichtung in dem Bereich angepasst ist, in dem das Stangenelement (12a) zumindest abschnittsweise flach ausgebildet ist und/oder
b) das Stangenelement (12a-12d) als Gewindeelement ausgebildet ist, das zumindest einen ersten Gewindestangenabschnitt (14a-14c) mit einem ersten Gewinde (16a-16c) aufweist, das in ein zweites Gewinde (44a-44c) des Konterelements (18a-18d) eingreift und der Dichtungsstopfen (10a-10d) ein relativ zum Gewindeelement (12a-12d) und/oder Konterelement (18a-18d) um die Längsachse des Gewindeelements und/oder Konterelements (18a-18d) rotierbares erstes Drehelement (20a-20d) aufweist, das mittelbar oder unmittelbar an dem Gewindeelement und dem ersten flexiblen Element (24a-24d) anliegt, wobei das Stangenelement (12d) einen zweiten Gewindestangenabschnitt (74) mit einem dritten Gewinde (76) aufweist, das in ein viertes Gewinde (78) des ersten Drehelements (20d) eingreift, wobei das erste sowie das zweite Gewinde (16c, 44c) gegenläufig zu dem dritten und vierten Gewinde (76, 78) ausgebildet sind.

2. Dichtungsstopfen nach Anspruch 1, **dadurch gekennzeichnet, dass** das erste flexible Element (24a-24e) in Form eines Schlauchs ausgebildet ist, der zumindest teilweise von dem Stangenelement (12a-12e) durchdrungen wird.

3. Dichtungsstopfen nach einem der vorhergehenden Ansprüche, **dadurch gekennzeichnet, dass** das Stangenelement (12a) an zwei gegenüberliegenden Seiten (46, 48) in Längsrichtung des Stangenelements (12a) flach ausgebildet ist.

4. Dichtungsstopfen nach einem der vorhergehenden Ansprüche, **dadurch gekennzeichnet, dass** der Dichtungsstopfen (10a, 10b) ein relativ zum Stangenelement (12b) und/oder Konterelement (18a, 18b) um die Längsachse des Stangenelements (12b) und/oder Konterelements (18a, 18b) rotierbares zweites Drehelement (22a, 22b) aufweist, das mittelbar oder unmittelbar an dem Stangenelement (12a) oder Konterelement (18b) und dem ersten flexiblen Element (24a, 24b) anliegt.

5. Dichtungsstopfen nach einem der vorhergehenden Ansprüche, **dadurch gekennzeichnet, dass** das Stangenelement (12b, 12c) in Form einer Schraube mit einem Schraubenkopf (56) und/oder einem Innenmehrkant ausgebildet ist.

6. Dichtungsstopfen nach einem der vorhergehenden Ansprüche, **dadurch gekennzeichnet, dass** der Dichtungsstopfen (10b, 10c) eine erste Hülse (58a, 58b) aufweist, die zumindest teilweise von dem Stangenelement (12b, 12c) durchdrungen wird, wobei das erste flexible Element (24b, 24c) an der ersten Hülse (58a, 58b) mittelbar oder unmittelbar anliegt.

7. Dichtungsstopfen nach Anspruch 6, **dadurch gekennzeichnet, dass** die erste Hülse (58b) in ihrer Längsrichtung konisch ausgebildet ist.

8. Dichtungsstopfen nach einem der vorhergehenden Ansprüche, **dadurch gekennzeichnet, dass** das Konterelement (18b-18d) in Form einer zweiten Hülse ausgebildet ist.

9. Betonwand (72a, 72b) mit einem Ankerloch und einem im Ankerloch befestigten Dichtungsstopfen (10a-f) nach einem der vorhergehenden Ansprüche.

## Claims

1. Sealing plug (10a-10d, 10f) for sealing anchor holes, in particular conical anchor holes, in concrete walls (72a),
comprising a rod element (12a-12e) that has at least one rod portion (14a-14d) that engages with a locking element (18a-18e), the sealing plug (10a-10d, 10f) comprising a first flexible element (24a-24e) that can be pressed in the longitudinal direction or in parallel with the longitudinal direction of the rod element (12a-12e) along the longitudinal axis of the rod element (12a-12e) and/or the locking element (18a-18e) due to a movement of the rod element (12a-12e) relative to the locking element (18a-18e),
the first flexible element (24a-24e) being movable along the longitudinal axis of the rod element (12a-12e) without rotation and the first flexible element (24a-24e) indirectly or directly abutting the rod element (12a-12e) and/or the locking element (18a-18e), **characterized in that**
a) the sealing plug (10a) comprises at least one second flexible element (26) that is separated from the first flexible element (24) by a first separating element (32), the first separating element (32) being non-rotatable with respect to the longitudinal axis of the rod element (12a), the rod element (12a) being planar at least in portions on at least one side (46, 48) in the longitudinal direction of the rod element (12a), the first separating element (32) comprising a through-passage, the cross section of which is adapted, by means of a clearance fit or an interference fit, to the cross section of the rod element (12a) perpendicularly to the longitudinal direction thereof in the region in which the rod element (12a) is planar at least in portions, and/or
b) the rod element (12a-12d) is designed as a threaded element that comprises at least one first threaded rod portion (14a-14c) having a first thread (16a-16c) that engages with a second thread (44a-44c) of the locking element (18a-18d) and the sealing plug (10a-10d) comprises a first rotary element (20a-20d) that is rotatable about the longitudinal axis of the threaded element and/or the locking element (18a-18d) relative to the threaded element (12a-12d) and/or the locking element (18a-18d) and indirectly or directly abuts the threaded element and the first flexible element (24a-24d), the rod element (12d) comprising a second threaded rod portion (74) having a third thread (76) that engages with a fourth thread (78) of the first rotary element (20d), the first and the second threads (16c, 44c) being opposite-handed with respect to the third and fourth threads (76, 78).

2. Sealing plug according to claim 1, **characterized in that** the first flexible element (24a-24e) is in the form of a tube that is penetrated by the rod element (12a-12e) at least in part.

3. Sealing plug according to either of the preceding claims, **characterized in that** the rod element (12a) is planar on two opposing sides (46, 48) in the longitudinal direction of the rod element (12a).

4. Sealing plug according to any of the preceding claims, **characterized in that** the sealing plug (10a, 10b) comprises a second rotary element (22a, 22b) that is rotatable about the longitudinal axis of the rod element (12b) and/or the locking element (18a, 18b) relative to the rod element (12b) and/or the locking element (18a, 18b) and indirectly or directly abuts the rod element (12a) or the locking element (18b) and the first flexible element (24a, 24b).

5. Sealing plug according to any of the preceding claims, **characterized in that** the rod element (12b, 12c) is in the form of a screw having a screw head (56) and/or a polygonal socket.

6. Sealing plug according to any of the preceding claims, **characterized in that** the sealing plug (10b, 10c) comprises a first sleeve (58a, 58b) that is penetrated by the rod element (12b, 12c) at least in part, the first flexible element (24b, 24c) indirectly or directly abutting the first sleeve (58a, 58b).

7. Sealing plug according to claim 6, **characterized in that** the first sleeve (58b) is conical in the longitudinal direction thereof.

8. Sealing plug according to any of the preceding claims, **characterized in that** the locking element (18b-18d) is in the form of a second sleeve.

9. Concrete wall (72a, 72b) comprising an anchor hole and a sealing plug (10a-f) according to any of the preceding claims that is fastened in the anchor hole.

## Revendications

1. Bouchon d'étanchéité (10a-10d, 10f) destiné à fermer des trous d'ancrage, en particulier de trous d'ancrage coniques, ménagés dans des murs en béton (72a), comprenant
un élément en barre (12a-12e) qui comporte au moins une section de barre (14a-14d) qui s'engage dans un élément homologue (18a-18e), le bouchon d'étanchéité (10a-10d, 10f) comportant un premier élément flexible (24a-24e) qui peut être comprimé dans la direction longitudinale ou parallèlement à la direction longitudinale de l'élément en barre (12a-12e) par un mouvement de l'élément en barre (12a-12e) par rapport à l'élément homologue (18a-18e) le long de l'axe longitudinal de l'élément en barre (12a-12e) et/ou de l'élément homologue (18a-18e),
le premier élément flexible (24a-24e) étant déplaçable sans pouvoir tourner le long de l'axe longitudinal de l'élément en barre (12a-12e) et le premier élément flexible (24a-24e) venant en appui directement ou indirectement sur l'élément en barre (12a-12e) et/ou l'élément homologue (18a-18e), **caractérisé en ce que**
a) le bouchon d'étanchéité (10a) comporte au moins un deuxième élément flexible (26) qui est séparé du premier élément flexible (24) par un premier élément de séparation (32), le premier élément de séparation (32) étant réalisé de manière à ne pas pouvoir tourner par rapport à l'axe longitudinal de l'élément en barre (12a), l'élément en barre (12a) ayant une forme plate du moins par sections au niveau d'au moins une face (46, 48) dans la direction longitudinale de l'élément en barre (12a), le premier élément de séparation (32) comportant un évidement de passage dont la section transversale est adaptée, par un ajustement avec jeu ou un ajustement serré, à la section transversale de l'élément en barre (12a) perpendiculairement à la direction longitudinale de celui-ci dans la zone dans laquelle l'élément en barre (12a) a une forme plate au moins par sections et/ou
b) l'élément en barre (12a-12d) est réalisé sous la forme d'un élément fileté qui comporte au moins une première section de barre filetée (14a-14c) dotée d'un premier filetage (16a-16c) qui s'engrène dans un deuxième filetage (44a-44c) de l'élément homologue (18a-18d) et le bouchon d'étanchéité (10a-10d) comporte un premier élément rotatif (20a-20d) qui peut tourner sur l'axe longitudinal de l'élément fileté et/ou de l'élément homologue (18a-18d) par rapport à l'élément fileté (12a-12d) et/ou à l'élément homologue (18a-18d) et qui vient en appui indirectement ou directement sur l'élément fileté et le premier élément flexible (24a-24d), l'élément en barre (12d) comportant une seconde section de barre filetée (74) dotée d'un troisième filetage (76) qui s'engrène dans un quatrième filetage (78) du premier élément rotatif (20d), le premier et le deuxième filetage (16c, 44c) étant réalisés en sens inverse du troisième et du quatrième filetage (76, 78).

2. Bouchon d'étanchéité selon la revendication 1, **caractérisé en ce que** le premier élément flexible (24a-24e) est réalisé sous la forme d'un tuyau qui est traversé du moins partiellement par l'élément en barre (12a-12e).

3. Bouchon d'étanchéité selon une des revendications précédentes, **caractérisé en ce que** l'élément en barre (12a) a une forme plate sur deux faces opposées (46, 48) dans la direction longitudinale de l'élément en barre (12a).

4. Bouchon d'étanchéité selon une des revendications précédentes, **caractérisé en ce que** le bouchon d'étanchéité (10a, 10b) comporte un second élément rotatif (22a, 22b) pouvant tourner autour de l'axe longitudinal de l'élément en barre (12b) et/ou de l'élément homologue (18a, 18b) par rapport à l'élément en barre (12b) et/ou l'élément homologue (18a, 18b), lequel second élément rotatif vient en appui indirectement ou directement sur l'élément en barre (12a) ou l'élément homologue (18b) et le premier élément flexible (24a, 24b).

5. Bouchon d'étanchéité selon l'une des revendications précédentes, **caractérisé en ce que** l'élément en barre (12b, 12c) est réalisé sous la forme d'une vis pourvue d'une tête de vis (56) et/ou à multipans creux.

6. Bouchon d'étanchéité selon l'une des revendications précédentes, **caractérisé en ce que** le bouchon d'étanchéité (10b, 10c) comporte un premier manchon (58a, 58b) qui est traversé du moins partiellement par l'élément en barre (12b, 12c), le premier élément flexible (24b, 24c) venant en appui indirectement ou directement sur le premier manchon (58a, 58b).

7. Bouchon d'étanchéité selon a revendication 6, **caractérisé en ce que** le premier manchon (58b) a une forme conique dans sa direction longitudinale.

8. Bouchon d'étanchéité selon l'une des revendications précédentes, **caractérisé en ce que** l'élément homologue (18b-18d) est réalisé sous la forme d'un second manchon.

9. Mur en béton (72a, 72b) comportant un trou d'ancrage et un bouchon d'étanchéité (10a-f) fixé dans le trou d'ancrage selon une des revendications précédentes.
